Europäisches Patentamt

European Patent Office

Office européen des brevets

(11) Veröffentlichungsnummer: **0 023 984
B1**

# (12) EUROPÄISCHE PATENTSCHRIFT

(45) Veröffentlichungstag der Patentschrift:
08.12.82

(21) Anmeldenummer: 80104125.2

(22) Anmeldetag: 16.07.80

(51) Int. Cl.³: **B 23 Q 11/02**

㊄ Vorrichtung an Verzahnungsmaschinen mit Stirnmesserköpfen, zum Entfernen von Spänen an den Schneiden der Messer.

(30) Priorität: 10.08.79 CH 7347/79

(43) Veröffentlichungstag der Anmeldung:
18.02.81 Patentblatt 81/7

(45) Bekanntmachung des Hinweises auf die Patenterteilung:
08.12.82 Patentblatt 82/49

(84) Benannte Vertragsstaaten:
CH DE FR GB IT LI

(56) Entgegenhaltungen:
**DE-A-1 814 412
DE-A-2 414 133
US-A-1 744 006**

(73) Patentinhaber: Werkzeugmaschinenfabrik
Oerlikon-Bührle AG, Birchstrasse 155, CH-8050 Zürich
(CH)

(72) Erfinder: Pestaj, Jerko, Rauchackerstrasse.36,
CH-8102 Oberengstringen (CH)

Vorrichtung an Verzahnungsmaschinen mit Stirnmesserköpfen, zum Entfernen
von Spänen an den Schneiden der Messer

Die Erfindung betrifft eine Vorrichtung an Verzahnungsmaschinen mit Stirnmesserköpfen zum Entfernen von Spänen an den Schneiden der Messer der Stirnmesserköpfe.

Insbesondere an Verzahnungsmaschinen mit höherer Leistung kommt es vor, daß an den Schneiden der Messer, nach einem Durchgang durch eine Zahnlücke, Späne hängenbleiben.

Beim nächsten Durchgang desselben Messers durch eine Zahnlücke trifft ein solcher Span zuerst auf die Zahnlückenwand auf und wird zwischen dieser und der Schneide eingeklemmt. Dadurch kann sowohl die Zahnlückenwand wie auch die Schneide beschädigt werden.

Der Erfindung wie sie in den Patentansprüchen gekennzeichnet ist, liegt die Aufgabe zugrunde, eine Vorrichtung zu schaffen, welche die Schneiden der Messer von anhaftenden Spänen befreit.

Ein weiterer Vorteil der erfindungsgemäßen Lösung bestehen darin, daß eine beliebige Verzahnungsmaschine mit einem Stirnmesserkopf auch nachträglich mit einer solchen Vorrichtung versehen werden kann.

Im folgenden wird die Erfindung anhand von ein Ausführungsbeispiel darstellenden Zeichnungen näher erläutert. Es zeigt

Fig. 1 eine Ansicht eines Stirnmesserkopfes mit einer erfindungsgemäßen Vorrichtung,

Fig. 2 eine Aufsicht eines Stirnmesserkopfes gemäß Fig. 1.

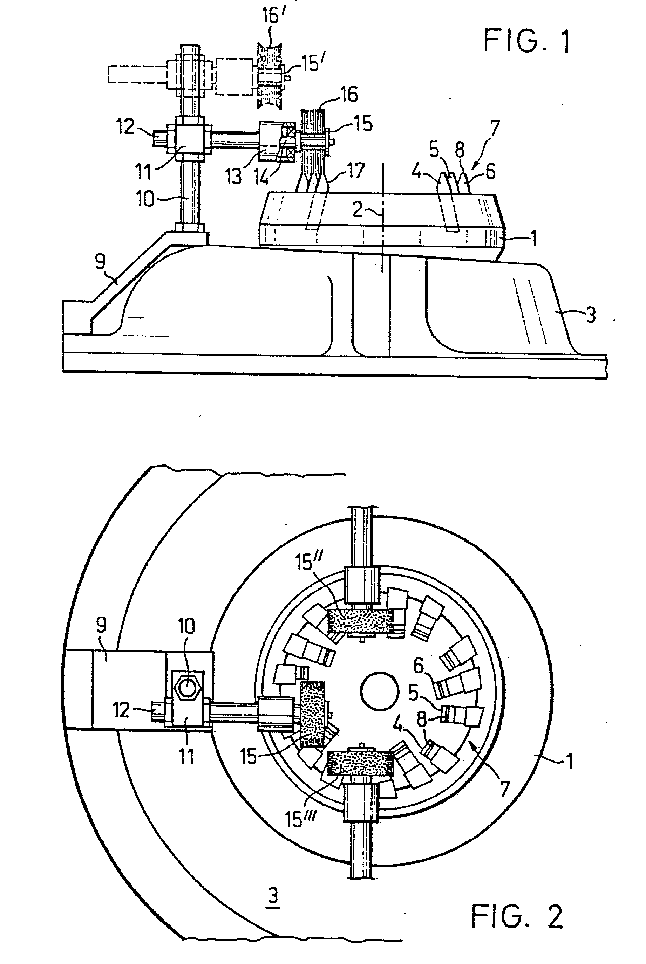

Fig. 1 zeigt einen Stirnmesserkopf 1, welcher um eine Messerkopfachse 2 drehbar, in einem Spindelgehäuse 3 einer nicht näher dargestellten Verzahnungsmaschine gelagert ist. Der Stirnmesserkopf 1 weist eine Anzahl Messer 4, 5, 6 auf, die beispielsweise eine Messergruppe 7 bilden. Jedes dieser Messer weist in an sich bekannter Weise eine Kopffreifläche 8 und eine Flankenfreifläche 17 auf.

Am Spindelgehäuse 3 ist beispielsweise ein Ausleger 9 befestigt, der wiederum eine parallel zur Messerkopfachse 2 verlaufende Welle 10 trägt. Über ein an der Welle 10 verstellbar befestigtes Kreuzstück 11 ist eine weitere Welle 12, welche zur Welle 10 senkrecht steht, mit dieser ebenfalls verstellbar verbunden. Die Welle 12 ist an ihrem, dem Stirnmesserkopf 1 zugekehrten Ende mit einem Lagerteil 13 versehen, in dem eine Drehachse 14 einer Bürste 15 gelagert ist. Eine der vielen Verstellmöglichkeiten der Bürste 15' ist gestrichelt angedeutet, wobei die Bürste (15') Borsten (16') unterschiedlicher Länge aufweist.

In Fig. 2 ist die Anordnung der Messer 4, 5, 6 der Messergruppe 7 mit den Kopffreiflächen 8 in einer Aufsicht dargestellt. Ebenso sind weitere mögliche Anordnungen von Bürsten 15″, 15‴ ersichtlich.

Wirkungsweise

Borsten 16 der Bürste 15 drücken mit geringer Vorspannung auf die Kopffreiflächen 8. Weitere Borsten 16, die nicht auf eine Kopffreifläche 8 auftreffen, gleiten den Flankenfreiflächen 17 und somit auch den Schneiden der Messer 4, 5, 6 entlang. Dadurch werden am Messer haftende Späne gelöst. Diese gelangen dann zwischen den Messern 4, 5, 6 an den Außenumfang des Stirnmesserkopfes 1 und fallen von dort in ein nicht näher dargestelltes Auffangbecken in der Verzahnungsmaschine.

Bei einer weiteren Ausführung einer Bürste 15' mit Borsten 16' unterschiedlicher Länge gleiten die längeren Borsten über einen entsprechend längeren Weg entlang den Flankenfreiflächen 17.

**Patentansprüche**

1. Vorrichtung an Verzahnungsmaschinen mit Stirnmesserköpfen (1), zum Entfernen von Spänen an den Schneiden der Messer (4, 5, 6) des Stirnmesserkopfes (1), gekennzeichnet durch eine, um eine Drehachse (14) drehbare Bürste (15) mit an den Berührungsstellen zwischen Messer (4, 5, 6) und Bürste (15) im wesentlichen senkrecht zu Kopffreiflächen (8) der Messer (4, 5, 6) angeordneten Borsten (16).

2. Vorrichtung gemäß Anspruch 1, dadurch gekennzeichnet, daß die Borsten (16) der Bürste (15) radial zur Drehachse (14) angeordnet sind.

3. Vorrichtung gemäß Anspruch 1, dadurch gekennzeichnet, daß die Drehachse (14) der Bürste im wesentlichen parallel zu den Kopffreiflächen (8) der Messer (4, 5; 6) angeordnet ist.

4. Vorrichtung gemäß Anspruch 3, dadurch gekennzeichnet, daß die Drehachse (14) zu einer Messerkopfachse (2) windschief steht.

5. Vorrichtung gemäß Anspruch 3, dadurch gekennzeichnet, daß die Drehachse (14) einstellbar angeordnet ist.

6. Vorrichtung gemäß Anspruch 3, dadurch gekennzeichnet, daß die Drehachse (14) starr angeordnet ist.

7. Vorrichtung gemäß Anspruch 3, dadurch gekennzeichnet, daß die Borsten (16) die Kopffreiflächen (8) mit Vorspannung belasten.

8. Vorrichtung gemäß Anspruch 3, dadurch gekennzeichnet, daß die Borsten (16') unterschiedliche Länge aufweisen.

## Claims

1. Apparatus for gear cutting machines with end milling cutters (1) for removing chips from the edges of the cutters (4, 5, 6) of the end milling cutter (1), characterised by a brush (15), rotatably mounted about an axis of rotation (14), containing brush bristles (16) arranged, at points of contact with the cutters (4, 5, 6), essentially perpendicular to top lands (8) of the cutters (4, 5, 6).

2. Apparatus according to claim 1, characterised in that the brush bristles (16) of the brush (15) are arranged essentially radially with respect to said axis of rotation (14).

3. Apparatus according to claim 1, characterised in that the axis of rotation (14) is defined by a rotatable shaft for the brush (15), which rotatable shaft is arranged essentially parallel to the top lands (8) of the cutters (4, 5, 6).

4. Apparatus according to claim 3, characterised in that the rotatable shaft (14) is disposed obliquely with respect to an axis (2) of the end milling cutter (1).

5. Apparatus according to claim 3, characterised in that the rotatable shaft (14) is adjustably arranged.

6. Apparatus according to claim 3, characterised in that the rotatable shaft (14) is fixedly mounted.

7. Apparatus according to claim 3, characterised in that the brush bristles (16) bear with a pre-tension against the top lands (8) of the cutters (4, 5, 6).

## Revendications

1. Dispositif pour machines à tailler les roues dentées, pourvues de fraises en bout (1) pour enlever les copeaux des lames (4, 5, 6) de la fraise (1), dispositif caractérisé en ce qu'il comporte, susceptible de tourner autour d'un axe de rotation (14), une brosse (15) avec, aux emplacements de contact entre les lames (4, 5, 6) et la brosse (15), des soies (16) disposées perpendiculairement par rapport aux surfaces libres (8) de la tête des lames (4, 5, 6).

2. Dispositif selon la revendication 1, caractérisé en ce que les soies (16) de la brosse (15) sont disposées radialement par rapport à l'axe de rotation (14).

3. Dispositif selon la revendication 1, caractérisé en ce que l'axe de rotation (14) de la brosse est essentiellement parallèle aux surfaces libres (8) de la tête des lames (4, 5, 6).

4. Dispositif selon la revendication 3, caractérisé en ce que l'axe de rotation (14) est décalé par rapport à l'axe (2) de la fraise.

5. Dispositif selon la revendication 3, caractérisé en ce que l'axe de rotation (14) est réglable.

6. Dispositif selon la revendication 3, caractérisé en ce que l'axe de rotation (14) est disposé à poste fixe.

7. Dispositif selon la revendication 3, caractérisé en ce que les soies (16) s'appliquent avec une précontrainte sur les surfaces libres (8) des têtes des lames.

8. Dispositif selon la revendication 3, caractérisé en ce que les soies (16') présentent des longueurs différentes.

FIG. 1

FIG. 2